# EUROPÄISCHE PATENTSCHRIFT

(11) **EP 1 373 777 B1**
(45) Veröffentlichungstag und Bekanntmachung des Hinweises auf die Patenterteilung: **08.03.2006**
(21) Anmeldenummer: 02730048.2
(22) Anmeldetag: 22.03.2002
(51) Int. Cl.: F16L 33/02

(54) **SCHLAUCHKLEMME**
TUBE CLAMP
COLLIER DE SERRAGE DE TUYAU

(30) Priorität: 26.03.2001 EP 01107515
(43) Veröffentlichungstag der Anmeldung: 02.01.2004
(73) Patentinhaber: Hans Oetiker AG Maschinen- und Apparatefabrik, 8812 Horgen (CH)
(72) Erfinder: OETIKER, Hans, CH-8812 Horgen (CH); MEIER, Ulrich, CH-8820 Wädenswil (CH)
(74) Vertreter: Strehl Schübel-Hopf & Partner
(86) Internationale Anmeldenummer: PCT/EP2002/003259
(87) Internationale Veröffentlichungsnummer: WO 2002/077509

(56) Entgegenhaltungen:
- EP-A- 0 591 648
- FR-A- 2 594 901
- US-E- R E33 934

## Beschreibung

Aus US 4,299,012 ist eine Schlauchklemme mit den im ersten Teil des Anspruchs 1 angegebenen Merkmalen bekannt. Diese Schlauchklemme hat sich wegen der Tatsache, daß ihre Innenfläche im gespannten Zustand frei von Lücken und Stufen ist und daher den Schlauch an sämtlichen Stellen seines Umfangs abstützt, auch zur Befestigung dünner, harter Schläuche an Rohrnippeln bewährt.

Zum Spannen der bekannten Schlauchklemme wird ein im äußeren Bandabschnitt vorgesehenes, sogenanntes "Oetiker-Ohr" mittels einer Zange verengt. Zur Überbrückung des unter dem Ohr verbleibenden Spaltes dient eine am inneren Bandende vorgesehene Zunge, die mit einem im äußeren Bandteil vorhandenen Zungenkanal zusammenwirkt. Der Kanal ist durch zwei parallele, in Bandlängsrichtung verlaufende Schnitte gebildet, wobei die beiden Bandbereiche außerhalb dieser Schnitte an ihren dem äußeren Bandende zugewandten Ende und der zwischen den Schnitten gelegene mittlere Teil an seinem vom äußeren Bandende abgewandten Ende jeweils um ein der Dicke des Bandmaterials entsprechendes Maß nach innen gekröpft sind.

Im geschlossenen, aber noch nicht gespannten Zustand der Schlauchklemme werden am inneren Bandabschnitt vorgesehene Haken in Öffnungen nahe dem äußeren Bandende eingehängt. Zunge und Zungenkanal sind so angeordnet und in Umfangsrichtung der Schlauchklemme so bemessen, daß das freie Ende der Zunge in diesem geschlossenen Zustand gerade den Kanal erreicht und der an die Zunge anschließenden Bereich voller Bandbreite den Abstand zwischen den Schenkeln des Ohrs überbrückt.

Bei Spannen schiebt sich die Zunge vollständig in den Zungenkanal hinein, bis ihr Ende nahe der Kröpfung des zwischen den beiden Schnitten gelegenen mittleren Bandteils und der an die Zunge anschließende Bereich der vollen Bandbreite nahe der Kröpfung am anderen Ende des Zungenkanals zu liegen kommen. In diesem gespannten Zustand ergeben sich zwar nahe den Kröpfungen jeweils Lücken; da jedoch die Lücken an keiner Stelle über die volle Bandbreite verlaufen, wird der Schlauch auch in diesen Bereichen mindestens von einem Teil der Bandbreite unterstützt, so daß zwischen Schlauch und Rohrnippel über den gesamten Umfang Dichtigkeit gewährleistet ist.

Bei der aus EP 0 570 742 A1 bekannten Schlauchklemme tritt die Zunge bei Spannen zwischen zwei an der Innenfläche des äußeren Bandabschnitts ausgebildete Sicken, die um ein der Dicke des Bandmaterials entsprechendes Maß nach innen springen und in einer ebenso hohen Stufe enden. Um zu gewährleisten, daß die Zunge während des gesamten Spannvorgangs seitlich geführt wird, sind auch hier Zunge und Sicken in Umfangsrichtung der Schlauchklemme so lang, daß die Zunge bereits im geschlossenen Zustand der Schlauchklemme den Zwischenraum zwischen den Sicken erreicht.

In US 4,315,348 ist eine Schlauchklemme mit einem das Ohr überbrückenden separaten Einlageteil beschrieben, dessen beide zungenartigen Enden zwei im äußeren Bandabschnitt vorhandene Fenster durchsetzen.

Der Erfindung liegt die Aufgabe zugrunde, Nachteile, wie sie bei vergleichbaren Schlauchklemmen nach dem Stand der Technik auftreten, mindestens teilweise zu beseitigen. Eine speziellere Aufgabe kann darin gesehen werden, eine Schlauchklemme anzugeben, die bei gegebenem Klemmendurchmesser mit möglichst geringer Bandmateriallänge auskommt.

Die erfindungsgemäße Lösung dieser Aufgabe ist in Anspruch 1 gekennzeichnet. Danach wird die am inneren Bandende vorhandene Zunge während des Spannens der Schlauchklemme nacheinander durch zwei verschiedene Maßnahmen geführt, wobei die Zunge im ersten Abschnitt der Spannbewegung von der Aussparung entfernt ist und erst im zweiten Abschnitt in die Aussparung eintritt und von ihr geführt wird. Daher kann die Zunge um rund die Hälfte kürzer sein als beim Stand der Technik, woraus sich eine entsprechende Einsparung an Bandmateriallänge ergibt.

In der Ausgestaltung nach Anspruch 2 ergibt sich eine besonders sichere Führung und Halterung des inneren Bandabschnitts in Richtung der Bandbreite.

Eine in der Herstellung einfache Möglichkeit der Zungenführung im ersten Abschnitt der Spannbewegung ist in den Ansprüchen 3 bis 5 angegeben.

Anspruch 6 bezieht sich auf eine Maßnahme, die beim Spannen der Schlauchklemme zwischen der Zunge und dem äußeren Bandabschnitt auftretende Reibung zu reduzieren.

Die Ausgestaltung der Erfindung nach den Ansprüchen 7 und 8 ergibt eine besonders sichere Führung der Zunge quer zur Bandlängsrichtung auch im ersten Abschnitt der Spannbewegung.

Gemäß Anspruch 9 und 10 ist die Erfindung bei Schlauchklemmen mit und ohne ohrartige Spanneinrichtung anwendbar.

Vorteilhafte Ausführungsbeispiele werden nachstehend anhand der Zeichnungen näher erläutert. Darin zeigt
- Fig. 1: eine Schlauchklemme gemäß einem ersten Ausführungsbeispiel im offenen Zustand,
- Fig. 2: einen etwas vergrößerten Querschnitt durch die Zunge und den äußeren Bandabschnitt der Schlauchklemme nach Fig. 1 im gespannten Zustand,
- Fig. 3: eine ohrlose Schlauchklemme gemäß einem zweiten Ausführungsbeispiel im geschlossenen, noch nicht gespannten Zustand,
- Fig. 4: eine etwas vergrößerte Teilansicht der Schlauchklemme nach Fig. 3, von innen gesehen,
- Fig. 5: eine Schlauchklemme mit Oetiker-Ohr gemäß einem dritten Ausführungsbeispiel der Erfindung im geschlossenen, noch nicht gespannten Zustand, und
- Fig. 6: eine vergrößerte Teildarstellung der Schlauchklemme nach Fig. 5, von innen gesehen.

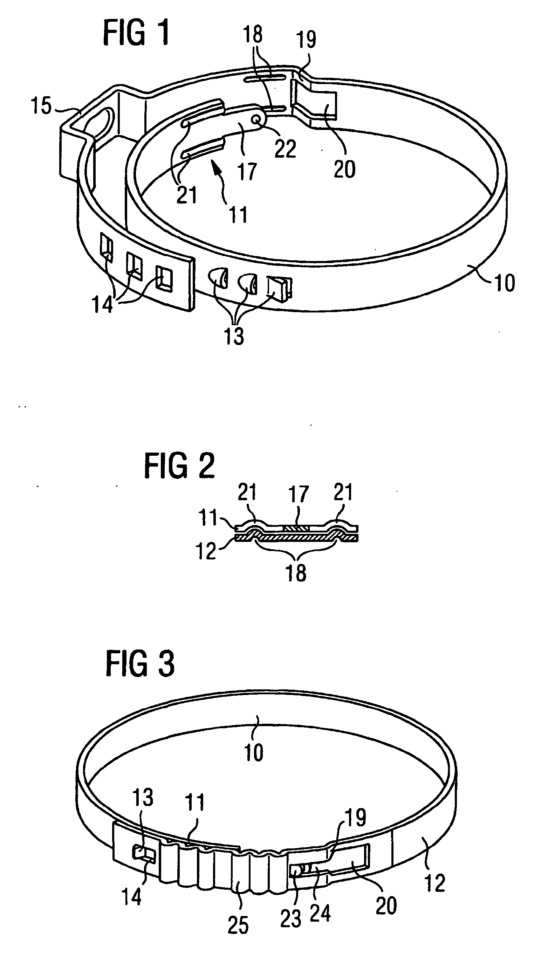

Die in Fig. 1 und 2 gezeigte offene Schlauchklemme ist aus einem Stahlband **10** einer Breite von beispielsweise 10 mm und einer Dicke von beispielsweise 1 mm gefertigt und zu der gezeigten Konfiguration mit einander überlappenden Bandenden vorgebogen. Dabei liegt der innere Bandendabschnitt **11** einem mit **12** bezeichneten äußeren Bandabschnitt gegenüber.

Um beispielsweise einen (nicht gezeigten) Schlauch gegenüber einem (ebenfalls nicht gezeigten) Rohrnippel abzudichten, wird die Schlauchklemme auf den zu dichtenden Schlauchbereich aufgebracht. Nach Einhängen von am inneren Bandteil vorgesehenen Haken **13** in nahe dem äußeren Bandende angeordnete Öffnungen **14** wird ein im äußeren Bandabschnitt **12** vorgesehenes, insgesamt etwa U-förmiges "Oetiker-Ohr" **15** mittels einer Zange zusammengedrückt, so daß die Schlauchklemme verengt und um den Schlauch gespannt wird.

An den inneren Bandendabschnitt **11** ist eine Zunge **17** angeformt, die bei der angenommenen Bandbreite von 10 mm eine Breite von beispielsweise 4 mm hat. Ihre Länge beträgt etwas mehr als die Hälfte des Maßes, um das das Ohr **15** beim Spannen verengt und der Umfang der Schlauchklemme verkürzt wird.

In den gegenüberliegenden äußeren Bandabschnitt **12** sind zwei seitliche, in Bandlängsrichtung verlaufende, radial nach innen springende Sicken **18** eingeformt. Die Sicken **18** sind nahe den äußeren Bandkanten angeordnet und haben jeweils eine Breite von etwa 1/10 bis höchstens 1/4 der Bandbreite. Die Länge der Sicken **18** in Bandlängsrichtung ist im wesentlichen gleich der Länge der Zunge **17.**

Die Sicken **18** enden an einer vom äußeren Bandende aus gesehen nach innen springenden Stufe **19,** die quer zur Bandlängsrichtung verläuft und eine der Dicke des Bandmaterials entsprechende Höhe hat.

Am Beginn der Stufe **19** und damit an dem vom äußeren Bandende abgewandten Ende der Sicken **18** beginnt ein insgesamt rechteckiges Fenster **20,** dessen Breite geringfügig größer ist als die Breite der Zunge **17** und dessen Länge über den Bereich der Stufe **19** hinausreicht.

Im inneren Bandendabschnitt **11** sind auf beiden Seiten der Zunge **17** und an deren Ende beginnend zwei nach innen springende Sicken **21** ausgebildet, deren Länge mindestens der Länge der Sicken **18** entspricht. Ferner ist die Zunge **17** nahe ihrem freien Ende mit einer nach außen weisenden punktförmigen Ausprägung **22** versehen.

Im geschlossenen, noch nicht gespannten Zustand, bei dem die am inneren Bandabschnitt vorgesehenen Haken **13** in die im äußeren Bandabschnitt **12** vorhandenen Öffnungen **14** eingehängt sind, greift das freie Ende der Zunge **17** gerade zwischen die im äußeren Bandabschnitt vorhandenen Sicken **18** ein. Wird nun zum Spannen der Schlauchklemme das Ohr **15** verengt, so verschiebt sich die Zunge **17** zunächst zwischen den Sicken **18** und wird von diesen geführt, so daß sich das innere Bandende gegenüber dem äußeren Bandabschnitt **12** nicht quer zur Bandlängsrichtung verlagern kann. Bei dieser Bewegung verringert die Ausprägung **22** die Reibung zwischen Zunge **17** und äußerem Bandabschnitt **12.**

In der zweiten Hälfte dieser Verengungsbewegung erreicht die Zunge **17** das Fenster **20** und durchsetzt es, während die im äußeren Bandabschnitt **12** vorhandenen Sicken **18** in die am inneren Bandendabschnitt **11** vorgesehenen Sicken **21** eingreifen. Im vollständig gespannten Zustand, bei dem das Ohr **15** bis auf einen geringfügigen Spalt geschlossen ist, befinden sich die zu beiden Seiten der Zunge **17** am inneren Bandendabschnitt **11** vorhandenen Schultern an der Stufe **19,** so daß an diesen beiden seitlichen Stellen nur eine geringfügige Lücke verbleibt. Da die Stufe **19** in ihrer Höhe der Materialstärke der Schlauchklemme entspricht und die Zunge **17** an dieser Stelle weiter und schließlich durch das Fenster **20** verläuft, ergibt sich im gespannten Zustand eine durchgehend glatte, lückenfreie Innenfläche der Schlauchklemme.

Die in Fig. 3 bis 6 gezeigten Varianten der Schlauchklemme unterscheiden sich von der nach Fig. 1 dadurch, daß die Zunge **17** in der ersten Hälfte der Spannbewegung nicht von im äußeren Bandabschnitt vorhandenen seitlichen Sicken sondern von einem an ihrem freien Ende nach außen ragenden Vorsprung **23** geführt wird, der in einen in das Fenster **20** übergehenden, schmäleren Schlitz **24** eingreift. Der Vorsprung **23** kann als Nase oder auch als nach hinten umgebogener Haken ausgebildet sein. Ein Haken hat den Vorteil hat, daß er sich am geschlossenen Ende des Schlitzes **24** einhängen läßt und dadurch ein unbeabsichtigtes Öffnen der geschlossenen Schlauchklemme erschwert.

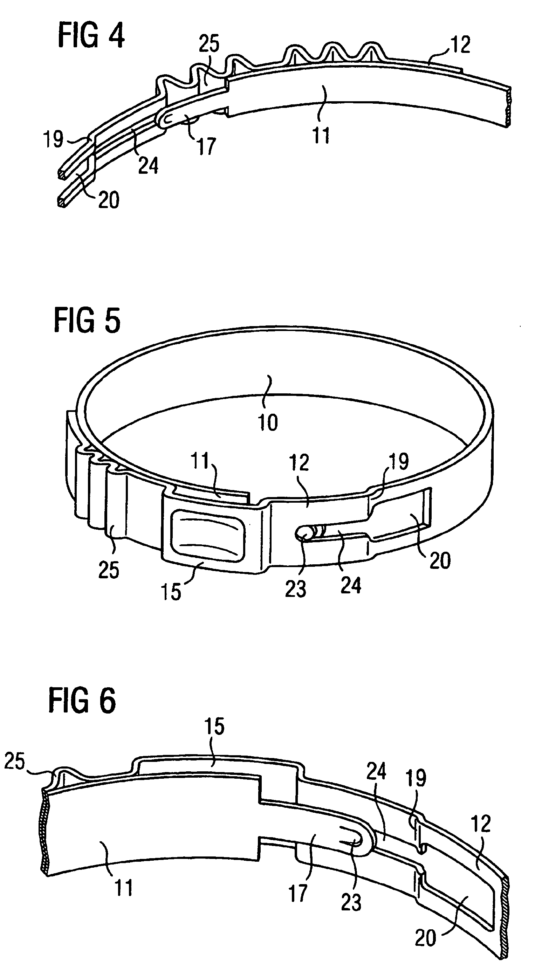

Bei der Schlauchklemme nach Fig. 3 und 4 handelt es sich um eine ohrlose Schlauchklemme, wobei die zum Abdichten zwischen Schlauch und Rohrnippel erforderliche Elastizität durch eine Wellung **25** erreicht wird.

Demgegenüber handelt es sich bei der Schlauchklemme nach Fig. 5 und 6 ebenso wie bei der nach Fig. 1 um eine solche mit Oetiker-Ohr **15,** wobei eine Wellung **25** als zusätzliche Elastizitätsreserve vorgesehen ist.

## Patentansprüche

1. Schlauchklemme, die aus einem offenen Band **(10)** mit einander überlappenden Bandenden besteht und von einem geschlossenen Zustand, in dem das äußere Bandende mit dem inneren Bandbereich verbunden ist, in einen gespannten Zustand mit verringertem Innenmaß überführbar ist, mit
einer am inneren Bandende vorhandenen Zunge **(17),**
einer im äußeren Bandabschnitt **(12)** vorgesehenen Aussparung **(20)** zur Aufnahme der Zunge **(17)** in dem gespannten Zustand, und
einer vom äußeren Bandende aus gesehen nach innen einspringenden Stufe **(19),** die im Bereich des dem äußeren Bandende zugewandten Endes der Aussparung **(20)** quer zur Bandlängsrichtung verläuft und eine der Dicke des Bandmaterials entsprechende Höhe aufweist,
**dadurch gekennzeichnet,**
**daß** die Länge der Zunge **(17)** wesentlich kürzer ist als die Innenmaßdifferenz des Schlauchklemme zwischen ihrem geschlossenen und ihrem gespannten Zustand und
**daß** der äußere Bandabschnitt **(12)** im Bereich zwischen dem äußeren Bandende und der Aussparung **(20)** eine Einrichtung **(18, 24)** zur seitlichen Führung der Zunge **(17)** vor ihrem Eintritt in die Aussparung aufweist.

2. Schlauchklemme nach Anspruch 1, wobei die Aussparung ein Fenster (20) zum Durchtritt der Zunge **(17)** im gespannten Zustand der Schlauchklemme ist.

3. Schlauchklemme nach Anspruch 1 oder 2, wobei die Führungseinrichtung im äußeren Bandabschnitt **(12)** auf beiden Seiten der Zunge **(17)** ausgebildete Sicken **(18)** umfaßt.

4. Schlauchklemme nach Anspruch 3, wobei der innere Bandendabschnitt **(11)** in dem in Bandlängsrichtung an die Zunge **(17)** angrenzenden Bereich zwei Sicken **(21)** aufweist, in die im Spannzustand der Schlauchklemme die beiden Sicken **(18)** des äußeren Bandabschnitts **(12)** eingreifen.

5. Schlauchklemme nach Anspruch 3 oder 4, wobei die Breite jeder Sicke **(18)** 1/4 bis 1/10 der Bandbreite beträgt.

6. Schlauchklemme nach einem der Ansprüche 1 bis 5, wobei nahe dem freien Ende der Zunge **(17)** eine dem äußeren Bandabschnitt **(12)** zugewandte punktförmige Ausprägung **(22)** vorgesehen ist.

7. Schlauchklemme nach Anspruch 1 oder 2, wobei die Führungseinrichtung einen in die Aussparung **(20)** übergehenden Schlitz **(24)** im äußeren Bandabschnitt **(12)** und einen in den Schlitz **(24)** eingreifenden Vorsprung **(23)** auf der Außenseite der Zunge **(17)** umfaßt.

8. Schlauchklemme nach Anspruch 7, wobei der Vorsprung **(23)** eine aus der Zunge **(17)** herausgeprägte Nase ist.

9. Schlauchklemme nach einem der vorhergehenden Ansprüche, wobei zwischen der Führungseinrichtung **(18, 24)** und dem äußeren Bandende eine ohrartige Spanneinrichtung **(15)** vorgesehen ist.

10. Schlauchklemme nach einem der vorhergehenden Ansprüche, wobei zwischen der Führungseinrichtung **(18, 24)** und dem äußeren Bandende eine Wellung **(25)** vorgesehen ist.

## Claims

1. A hose clamp which consists of an open band **(10)** with overlapping band ends and which is adapted to be transferred from a closed condition in which the outer band end is connected to the inner band portion, to a tightened condition having a reduced inner dimension, comprising
a tongue **(17)** provided at the inner band end,
an aperture **(20)** provided in the outer band portion **(12)** for receiving the tongue **(17)** in the tightened condition, and
a step **(19)** which projects inwardly as seen from the outer band end, which extends transversely to the band longitudinal direction within the area of the end of the aperture **(20)** nearer to the outer band end, and which has a height corresponding to the thickness of the band material,
**characterised in**
**that** the length of the tongue **(17)** is substantially shorter than the difference between the inner dimension of the hose clamp in its closed condition and that of the hose clamp in its tightened condition, and
**that** the outer band portion **(12)** in the region between its outer band end and the aperture **(20)** has means **(18, 24)** for laterally guiding the tongue **(17)** prior to its entry into the aperture.

2. The hose clamp of claim 1 wherein the aperture is a window (**20**) for the tongue (**17**) to pass in the tightened condition of the hose clamp.

3. The hose clamp of claim 1 or claim 2 wherein the guiding means includes beads (**18**) formed in the outer band portion **(12)** on both sides of the tongue **(17).**

4. The hose clamp of claim 3 wherein the inner band end portion **(11)** has two beads **(21)** in the area adjacent the tongue **(17)** in the band longitudinal direction, which beads are engaged, in the tightened condition of the hose clamp, by the two beads **(18)** in the outer band portion **(12).**

5. The hose clamp of claim 3 of claim 4 wherein the width of each bead **(18)** is 1/4 to 1/10 of the band width.

6. The hose clamp of any preceding claim wherein a point-shaped embossment **(22)** facing the outer band portion **(12)** is provided near the free end of the tongue **(17).**

7. The hose clamp of claim 1 or claim 2 wherein the guiding means includes a slot **(24)** continuous with the aperture **(20)** in the outer band portion **(12)** and a projection **(23)** on the outer side of the tongue **(17)** for engaging the slot **(24).**

8. The hose clamp of claim 7 wherein the projection **(23)** is a nose punched out of the tongue **(17).**

9. The hose clamp of any preceding claim wherein an ear-type tightening means **(15)** is provided between the guiding means **(18, 24)** and the outer band end.

10. The hose clamp of any preceding claim wherein an undulation **(25)** is provided between the guiding means **(18, 24)** and the outer band end.

## Revendications

1. Collier de serrage pour tuyau qui est constitué d'une bande ouverte (10) avec des extrémités de bande se chevauchant l'une l'autre et qui peut passer d'un état fermé, dans lequel l'extrémité extérieure de la bande est reliée à sa zone intérieure, à un état tendu avec une cote intérieure réduite, comportant
une languette (17) prévue sur l'extrémité intérieure de la bande,
une découpe (20) prévue dans le segment extérieur (12) de la bande, pour recevoir la languette (17) à l'état tendu, et
un gradin (19) en retrait vers l'intérieur, vu depuis l'extrémité extérieure de la bande, lequel gradin s'étend transversalement à la direction longitudinale de la bande, dans la zone de l'extrémité de la découpe (20), tournée vers l'extrémité extérieure de la bande, et présente une hauteur correspondant à l'épaisseur du matériau de la bande,
**caractérisé en ce que** la longueur de la languette (17) est sensiblement plus courte que la différence des cotes intérieures du collier de serrage pour tuyau entre son état fermé et son état tendu, et
**en ce que** le segment extérieur (12) de la bande comporte, dans la zone comprise entre l'extrémité extérieure de la bande et la découpe (20), un dispositif (18, 24) pour le guidage latéral de la languette (17) avant son entrée dans la découpe.

2. Collier de serrage pour tuyau selon la revendication 1, dans lequel la découpe est une fenêtre (20) pour le passage de la languette (17) à l'état tendu du collier de serrage pour tuyau.

3. Collier de serrage pour tuyau selon la revendication 1 ou 2, dans lequel le dispositif de guidage dans le segment extérieur (12) de la bande comprend des moulures (18) réalisées sur les deux côtés de la languette (17).

4. Collier de serrage pour tuyau selon la revendication 3, dans lequel le segment intérieur (11) de la bande présente, dans la zone adjacente à la languette (17), dans la direction longitudinale de la bande, deux moulures (21) dans lesquelles s'engagent les deux moulures (18) du segment extérieur (12) de la bande à l'état tendu du collier de serrage pour tuyau.

5. Collier de serrage pour tuyau selon la revendication 3 ou 4, dans lequel la largeur de chaque moulure (18) est égale de ¼ à ¹/₁₀ de la largeur de la bande.

6. Collier de serrage pour tuyau selon l'une des revendications 1 à 5, dans lequel à proximité de l'extrémité libre de la languette (17) est prévue une empreinte (22) ponctuelle tournée vers le segment extérieur (12) de la bande.

7. Collier de serrage pour tuyau selon la revendication 1 ou 2, dans lequel le dispositif de guidage comprend une fente (24), se prolongeant par la découpe (20), dans le segment extérieur (12) de la bande et une saillie (23) s'engageant dans la fente (24), sur le côté extérieur de la languette (17).

8. Collier de serrage pour tuyau selon la revendication 7, dans lequel la saillie (23) est un ergot ressorti par estampage de la languette (17).

9. Collier de serrage pour tuyau selon l'une des revendications précédentes, dans lequel un dispositif de tension (15) de type oreille est prévu entre le dispositif de guidage (18, 24) et l'extrémité extérieure de la bande.

10. Collier de serrage pour tuyau selon l'une des revendications précédentes, dans lequel une ondulation (25) est prévue entre le dispositif de guidage (18, 24) et l'extrémité extérieure de la bande.
